# EUROPEAN PATENT APPLICATION

(11) **EP 1 954 094 A1**
(43) Date of publication of application: **06.08.2008**
(21) Application number: 05809599.3
(22) Date of filing: 25.11.2005
(51) Int. Cl.: H04R 1/02

(54) **PORTABLE TERMINAL**

(71) Applicant: MITSUBISHI DENKI KABUSHIKI KAISHA, Chiyoda-ku, Tokyo 100-8310 (JP)
(72) Inventor: INOUE, Kazumi, uchi 2-chome, Chiyoda-ku, Tokyo 1008310; (JP)
(74) Representative: Popp, Eugen
(86) International application number: PCT/JP2005/021698
(87) International publication number: WO 2007/060730

(57) **Abstract**

There has been a problem that a portable telephone grows larger its size by the volume of a space for improving its acoustic characteristics. Then, a portable terminal includes upper casing 101 equipped with a display 110; lower casing 102 which is relatively movably connected with the upper casing 101 opposed to the back of the upper casing 101, and in which a speaker opening 108 for emitting a voice produced by a built-in speaker 104 is formed; and a rib 106 formed so as to enclose the speaker opening in a way that the rib closes in the other direction while opening in an arbitrary direction, and so as to extend to an end of the lower casing 102 in the vicinity of the speaker opening 108 provided at the front of the lower casing 102 opposed to the back of the upper casing 101, with the lower casing being relatively movably connected with the upper casing 101. Briefly, since the rib 106 and the back of the upper casing 101 can be devoted as a space for improving its acoustic characteristics, this eliminates the need for the provision of the space for improving its acoustic characteristics in the casing, thus enabling the downsizing and slimming of the casing.

## Description

### TECHNICAL FIELD

The present invention relates to a slide type portable terminal slidably connecting an upper casing having a display and a lower casing having an operating portion, and including a speaker outputting voice.

### BACKGROUND ART

A slide type portable terminal (e.g., a portable telephone) is arranged such that lower casing having an operating portion, relatively moves almost parallel to upper casing having a display and a receiving portion, the display and the receiving portion of the upper casing are exposed, and a transition occurs from a "closed state" where the operating portion of the lower casing is covered by the upper casing to an "opened state" where all of the display and the receiving portion of the upper casing and the operating portion of the lower casing are exposed. A slide type portable telephone has a slide mechanism slidably combining the upper casing with the lower casing in order to actualize such an operation. A universal structure of the slide type portable telephone is disclosed in Patent Document 1.

Patent Document 1: JP-A2003-125052

Further, since modern portable telephones include a plurality of speakers for installation of a music reproducing function. In the universal portable telephone, a speaker is disposed within the casing, and a voice output from the speaker is given out through a through hole. The portable telephone disclosed in Patent Document 2 has a duct, between the through hole and the speaker, forming a voice path between the speaker and the through hole in order for a voice output by the speaker to be efficiently transmitted to the through hole.

Patent Document 2: JP-A2001-168966

Moreover, Patent Document 3 discloses a handset type cordless telephone, on the back of which a voice emitting hole of the speaker is formed, wherein protrusions are provided at positions adjacent to the voice emitting hole so as not to obstruct the voice emitting hole when the telephone is placed on its back. Since the provision of the protrusions creates a space between the voice emitting hole and an installation surface with the telephone placing on its back, this settles the problem that the voice emitting hole is obstructed by the installation surface.

Patent Document 3: JU-A1995-25645

### DISCLOSURE OF THE INVENTION

### Problem to be Solved by the Invention

Incidentally, in many cases, a voice output by the speaker goes via a space of a certain volume in order to improve its acoustic characteristics before being output outside from the casing. The space is provided between the speaker disposed within the casing and an output hole outputting the voice outside the casing (the space is sometimes termed a "front air chamber."). The space is often formed by a rib provided on the inner face of the casing between the speaker and casing opening; however, dosing so results in the increased volume of the portable telephone by the volume of the space. Therefore, it remains unsettled in striving for the downsizing and sliming of the portable telephone. Moreover, depending on the shape of the portable telephone, there are some cases where a "voice channel", like a duct leading a voice outside from a voice emitting hole of a speaker of the casing is provided, and an opening direction of the voice emitting hole of the speaker and that of a voice output hole outputting the reproduced voice from the casing are differ from each other. In that case, the voice channel may become a "space" for conducing to improvements of the acoustic characteristics thereof.

The present invention has been made to solve the above-mentioned problems, and intended to labor for the downsizing and slimming of the portable telephone by reducing the mounting volume for the speaker making use of the shape of a portable telephone named a "slide type". Besides, an object of the present invention is to provide a portable telephone having different directions along which a voice may be led outside according to the opening and closing of the slide type portable telephone.

### Means for Solving Problem

The portable terminal according to the present invention includes first casing having a display displaying images; second casing which is relatively movably connected with the first casing opposed to the back of the first casing that is an opposite face of the front thereof, and in which a speaker opening for outputting a voice by a built-in speaker is formed; and a rib formed so as to enclose the speaker opening in a way that the rib closes in the other direction while opening in an arbitrary direction on the second casing, and so as to extend to an end of the second casing in the vicinity of the speaker opening formed at the front of the second casing opposed to the back of the first casing with the second casing being relatively movably connected with the first casing.

The portable terminal according to the present invention includes first casing having a display displaying images; second casing which is relatively movably connected with the first casing opposed to the back of the first casing that is an opposite face of the front thereof, and in which a speaker opening for outputting a voice produced by a built-in speaker is formed; a first rib formed so as to enclose the speaker opening in a way that the first rib closes in the other direction while opening in an arbitrary direction on the back of the first casing, and so as to extend to an end of the first casing at a predetermined position on the back of the first casing opposed to the speaker opening of the second casing in a closed state that is a state where the first casing and the second casing are nearly superposed; and a second rib formed so as to enclose the speaker opening in a manner that the second rib closes in the other direction while opening in an arbitrary direction on the back of the first casing, and so as to extend to an end of the first casing at a predetermined position on the back of the first casing opposed to the speaker opening in an opened state where a transition is occurred from the closed state to a state where at least a part of the second casing superposes on the first casing.

### Effect of the Invention

The portable terminal according to the present invention includes first casing having a display displaying images; second casing which is relatively movably connected with the first casing opposed to the back of the first casing that is an opposite face of the front thereof, and in which a speaker opening for outputting a voice produced by a built-in speaker is formed; and a rib formed so as to enclose the speaker opening in a way that the rib closes in the other direction while opening in an arbitrary direction on the second casing, and so as to extend to an end of the second casing in the vicinity of the speaker opening formed at the front of the second casing opposed to the back of the first casing, with the second casing being relatively movably connected with the first casing. The structure thus constructed as above achieves the downsizing and slimming of the casing as it eliminates the need for the provision of a space for improving the acoustic characteristics thereof inside the casing.

The portable terminal according to the present invention includes first casing having a display displaying images; second casing which is relatively movably connected with the first casing opposed to the back of the first casing that is an opposite face of the front thereof, and in which a speaker opening for outputting a voice produced by a built-in speaker is formed; a first rib formed so as to enclose the speaker opening in a way that the first rib encloses in the other direction while opening in an arbitrary direction on the back of the first casing, and so as to extend to an end of the first casing at a predetermined position on the back of the first casing opposed to the speaker opening of the second casing in a closed state that is a state where the first casing and the second casing are almost superposed; and a second rib formed so as to enclose the speaker opening in a manner that the second rib closes in the other direction while opening in an arbitrary direction on the back of the first casing, and so as to extend to an end of the first casing at a predetermined position on the back of the first casing opposed to the speaker opening in an opened state
where a transition is occurred from a closed state to a state where at least a part of the second casing superposes on the first casing.

### BRIEF DESCRIPTION OF THE DRAWINGS

FIG. 1 is an external perspective view of a slide type portable telephone according to the first embodiment of the present invention.
FIG. 2 is an exploded perspective view of the slide type portable telephone.
FIG. 3 is a sectional view of a speaker mounting part.
FIG. 4A and FIG. 4B are comparative and explanatory views for showing comparatively the opening directions of voice output holes.
FIG. 5 is an exploded perspective view of a slide type portable telephone according to the second embodiment of the present invention.
FIG. 6 is a sectional view of a speaker mounting part.
FIG. 7A and FIG. 7B are exploded perspective views of a slide type portable telephone according to the third embodiment of the present invention.
FIG. 8A is an explanatory view showing the directions of voice output holes in a slid and opened state, and FIG. 8B is an external perspective view thereof.
FIG. 9A is an explanatory view showing the directions of voice output holes in a slid and closed state, and FIG. 9B is an external perspective view thereof.

### DESCRIPTION OF REFERENCE NUMERALS

101 upper casing, 102 lower casing, 103 lower casing upper side, 104 speaker, 105 voice output hole, 106 rib, 107 voice channel, 108 clearance, 109 voice emitting hole, 110 display, 111 receiving speaker, 112 key operating portion, 113 speaker diaphragm, 300 rib, 301 voice output hole, 302 rib, 303 voice output hole, 304 rib, 305 voice output hole, 306 rib, 307 voice output hole

### BEST MODE FOR CARRYING OUT THE INVENTION

### First Embodiment

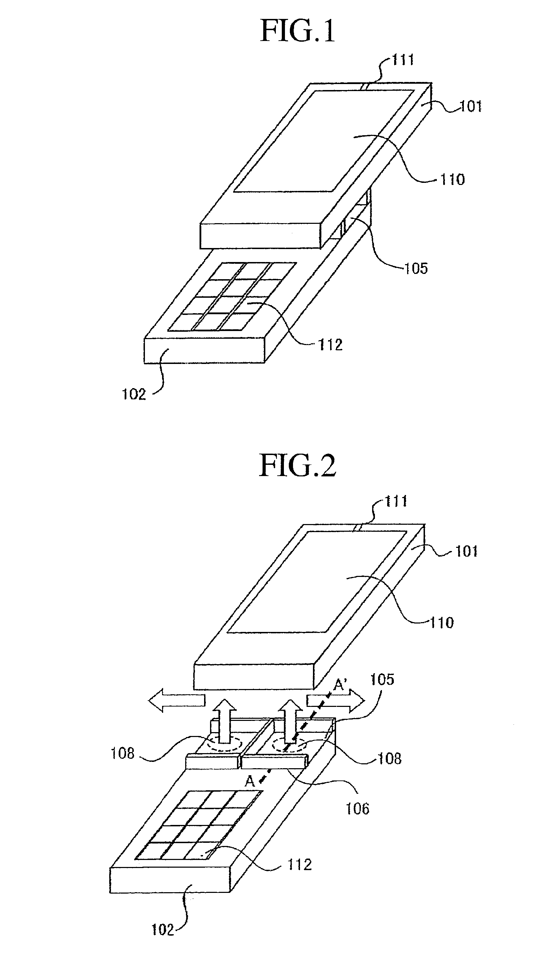

A first embodiment of the present invention will now be described below. FIG. 1 is an external perspective view for showing an external appearance of a slide type portable telephone. In FIG. 1, the slide type portable telephone is shown in a state where upper casing 101 and lower casing 102 are opened. In a state where the upper casing 101 and the lower casing 102 are opened as shown in FIG. 1, a display 110 and a receiving portion 111 of the upper casing 101 and an operating portion 112 of the lower casing 102 are all exposed. Meanwhile, in a state where the upper casing 101 and the lower casing 102 are closed, the display 110 and the receiving portion 111 of the upper casing 101 are exposed, but the operating portion 112 of the lower casing 102 is covered by the upper casing 101. The slide type portable telephone shown in FIG. 1 includes a speaker for outputting ringing melodies and reproducing music in addition to the receiving portion 111. A voice reproduced by the speaker is output outside from the sides of the slide type portable telephone via voice output holes 105.

FIG. 2 is an exploded perspective view of the slide type portable telephone in a state where the upper casing 101 and the lower casing 102 are opened. A speaker 104 is provided at a position (on the upper end side of the lower casing 102) where the upper casing 101 and the lower casing 102 superpose in a state where the upper casing 101 and the lower casing 102 are slid and opened. Referring to FIG. 2, clearances 108 are provided that are casing openings, and a voice emitting hole 109 and a speaker main body 104 are provided at the bottom of each of the clearances 108. Moreover, a rib 106 formed so as to enclose the speaker opening in a way that the rib closes in an arbitrary direction while closing in other direction on the lower casing 102, and so as to extend to an end of the lower casing 102 in the vicinity of the clearance 108 (speaker opening) formed at the front of the lower casing 102 opposed to the back of the upper casing 101. In the case of FIG. 2, the rib 106 is formed in "U" shape which is opened only in a direction that is a lateral side of the lower casing 102 and is closed in the other direction while enclosing the clearance 108. The rib 106 is formed on the lower casing 102 as shown in FIG. 2. Instead, it is also possible to form the rib on the face (back side) of the upper casing 101 opposed to the lower casing 102 with the upper casing 101 and the lower casing 102 slidably assembled each other. In FIG. 2, the same reference numerals as those in FIG. 1 denote the same or corresponding parts, and therefore an explanation thereof is omitted.

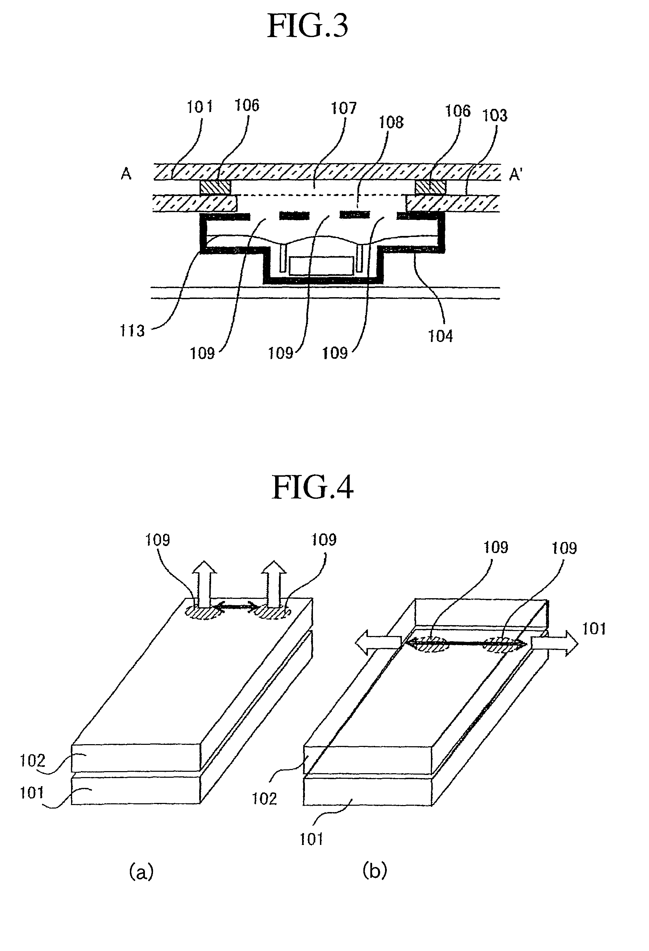

FIG. 3 is a sectional view of a speaker mounting part. In FIG. 3, the speaker main body 104 is composed of a diaphragm 113 and a voice emitting hole 109. Further, the speaker 104 is in contact with a substrate, and is electrically connected therewith. The speaker 104 is provided in contact with the inner side of the lower casing at a position corresponding to an opening of the lower casing upper side 103. More particularly, the casing opening is formed smaller than the diameter of the speaker 104, and the end of the speaker 104 is provided in contact with the inner side of the casing. The clearance 108 shown in FIG. 3 is an opening provided on the face of the lower casing 102, and is a space (first space) having the volume calculated from an area of the opening and the thickness of the lower casing 103. Furthermore, the rib 106 is provided, outside the lower casing 102, enclosing the opening with only one direction of the voice output hole 105 side opened. Since the back of the upper casing 101 covers the rib 106 regardless of whether the upper casing 101 and the lower casing 102 slidably connected are in the opened state or in the closed state, the back of the upper casing 101 and the rib 106 create a space (second space) . That is, it obviates the formation of a space such as a front air chamber for improving the acoustic characteristics between the speaker 104 and the casing opening inside the casing since the first and the second spaces can be used as a space (front air chamber) for improving the acoustic characteristics thereof.

FIG. 4A and FIG. 4B are comparative and explanatory views for showing comparatively voice output directions. FIG. 4A shows a universal portable telephone where voice emitting holes 109 are formed on the back of the lower casing 102. FIG. 4B shows a portable telephone according to the present invention where the voice emitting holes 109 are formed at the front of the lower casing 102 opposed to the upper casing 101 in a state where the upper casing 101 and the lower casing 102 are slidably connected. Though the rib 106 is not shown in FIG. 4B, since the portable telephone shown in FIG. 4B outputs a voice from the voice output holes on the portable telephone sides through the voice channels formed by the rib 106, the voice can be output rightwardly and leftwardly therefrom. Besides, it is also feasible to heighten a stereo effect and a three-dimensional acoustic effect by adjusting the distance between the right and the left voice output holes.

As described above, according to the present invention, it allows devoting the first space having the volume calculated from the area of the casing opening and the thickness of the casing and the second space formed by the back of the upper casing and the rib, as a space for improving the acoustic characteristics by providing the speaker 104 in contact with the inner side of the casing opening, and further, providing the rib 106 enclosing the casing opening with the casing opening opened in only one direction of the voice output hole side. Therefore, such adaptability enables the downsizing and sliming of the housing as it eliminates the need for the provision of the space for improving the acoustic characteristics inside the casing.

### Second Embodiment

In the portable terminal according to the first embodiment, an example is given of using the first space having the volume calculated from the area of the opening and the thickness of the casing and the second space formed by the back of the upper casing and the rib, as the space for improving the acoustic characteristics thereof by providing the casing opening smaller than the diameter of the speaker 104 to provide the speaker 104 in contact with the inner side of the casing, and further, providing the rib 106 enclosing the casing opening with the casing opening opened only in one direction of the voice output hole side. However, it is practicable to further slim the casing, in lieu of providing the speaker 104 in contact with the inner side of the casing, by forming the casing opening larger than the diameter of the speaker 104, contacting the side of the speaker 104 with the inner side of the casing opening, and further, contacting the upper end of the speaker 104 with the rib.

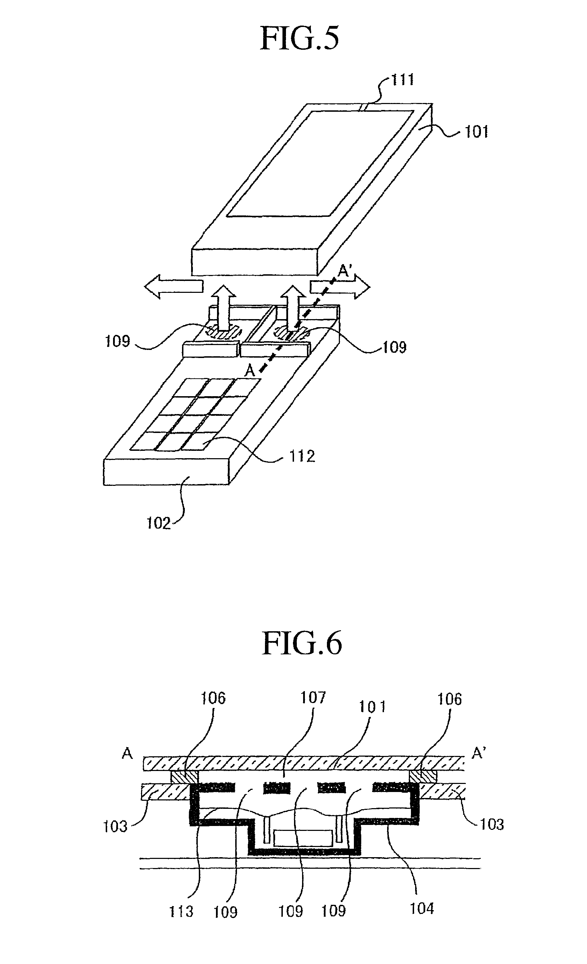

FIG. 5 is an exploded perspective view of a slide type portable telephone according to the second embodiment of the present invention. In FIG. 5, the voice emitting holes 109 of the speaker 104 are shown at a position (on the upper end side of the lower casing 102) where the upper casing 101 and the lower casing 102 superpose in a state where the upper casing 101 and the lower casing 102 are slid and opened. The rib 106 is formed in "U" shape which is opened only in one direction that is a lateral direction of the lower casing 102 and is closed in other direction while enclosing the voice emitting hole 109. In FIG. 5, the same reference numerals as those in FIG. 2 denote the same or corresponding parts, and therefore an explanation thereof is omitted.

FIG. 6 is a sectional view of a speaker mounting part. Referring to FIG. 6, the casing opening is formed larger than the diameter of the speaker 104. Further, the speaker 104 is provided with the outer side thereof contacted with the inner side of the casing opening, and the upper end thereof contacted with the rib 106. Therefore, in the structure shown in FIG. 6, since the clearance 108 shown in FIG. 3 is occupied by the speaker 104, a space corresponding to the "first space" explained in the first embodiment does not exist therein. Nevertheless, there exists the rib 106 enclosing the voice emitting hole 109 with the voice emitting hole opened only in one direction of the voice output hole 105 side and the space (second space) of the back of the upper casing 101, and the second space is devoted as a space for improving the acoustic characteristics thereof.

As described hereinabove, the structure of the second embodiment makes possible to reduce the mounting volume by the volume corresponding to the first space by forming the casing opening larger than the diameter of the speaker 104, and providing the speaker 104 with the outer side of the speaker 104 contacted with the inner side of the casing opening and further, the upper end of the speaker 104 contacted with the rib 106. This attains the downsizing and slimming of the portable terminal. Especially, it exerts an effect of allowing the downsizing and sliming thereof by the thickness of the casing.

### Third Embodiment

In the slide type portable telephone explained in the first embodiment and the second embodiment, an example is given in which the rib 106 enclosing, except in one direction, the speaker 104 disposed in the lower casing is provided on the lower casing 102. And the voice from the speaker is output from the voice output holes formed on both lateral sides of the portable telephone through the voice channels formed by the rib 106. Accordingly, since a positional relationship between the rib 106 and the speaker 104 is kept unchanged regardless of whether the upper casing 101 and the lower casing 102 are in the opened state or in the closed state, the voice from the speaker is output outside from the voice output holes on the lateral sides of the portable telephone.

In the slide type portable telephone explained hereinbelow, a rib is formed on the upper casing and a positional relationship between the rib and the speaker is changed according to whether the upper casing 101 and the lower casing 102 are in the opened state or in the closed state, thus changing a position on the casing from which a voice from the speaker is output according to the opening and closing state of the upper casing 101 and the lower casing 102. In the slide type portable telephone, a large-sized display is exposed all the times on its casing regardless of whether the casings are in the opened state or in the closed state. To put it concretely, it may be assumed a case that the slide type portable telephone is laid not only "lengthways" that is a state where the terminal is held by hand as is conventionally done, but also laid "sideways" where, e.g. , TV programs or moving picture applications are displayed on its oblong screen with the telephone being mounted on a horizontal holder. For this reason, it will be convenient for a user to be able to be changed a voice output position from which a voice from the speaker is output, according to circumstances, between the case where the terminal is laid "lengthways" and the case where the terminal is laid "sideways."

Thus, the slide type portable telephone explained hereinafter includes first ribs 304, 306 formed so as to enclose the speaker opening 108 in a way that the first ribs close in the other direction while opening in an arbitrary direction on the back of the upper casing 101, and so as to extend to an end of the upper casing 101, at predetermined positions on the back of the upper casing 101 opposed to the respective speaker openings 108 of the lower casing 102, in a closed state where the upper casing 101 and the lower casing 102 are almost superposed each other; and second ribs 300, 302 formed so as to enclose the speaker opening 108 in a manner that the second ribs close in the other direction while opening in an arbitrary direction on the back of the upper casing 101, and so as to extend to an end of the upper casing 101, at predetermined positions on the back of the upper casing opposed to the respective speaker openings 108, in an opened state where a transition is occurred from the closed state to a state where at least a part of the lower casing 102 superposes on the upper casing 101.

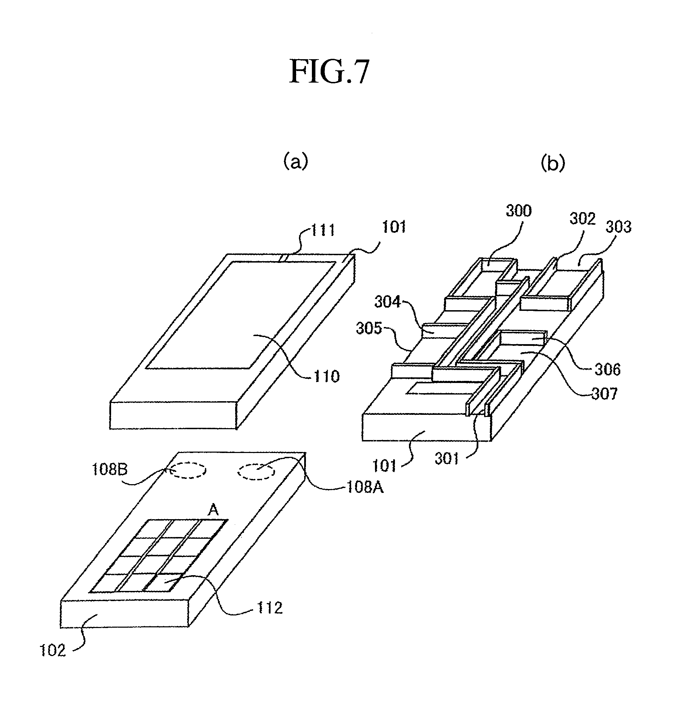

FIG. 7A and 7B are exploded perspective views of a slide type portable telephone according to the third embodiment of the present invention. FIG. 7A is an exploded perspective view showing a disassembled state of the upper casing 101 and the lower casing 102. Referring to FIG. 7A, no rib is formed around clearances 108A, 108B on the lower casing 102. The speaker main body 104 is formed in the depths of the clearances 108A, 108B, respectively, provided on the lower casing 102. The clearance 108A is hereinafter referred to as a "first speaker opening," and the clearance 108B is referred to as a "second speaker opening" for convenience of explanation. FIG. 7B is a perspective view for showing the structure on the back side (the face of the upper casing 101 opposed to the lower casing 102 in a state where the upper casing 101 and the lower casing 102 are slidably assembled each other) of the upper casing 101. In FIG. 7B, a rib 300 enclosing the first speaker opening 108A, and a voice output hole 301 outputting outside a speaker voice going through the voice channel formed by the rib 300, a rib 302 enclosing the second speaker opening 118B, and a voice output hole 303 outputting outside a speaker voice going through the voice channel formed by the rib 302 are shown in a state where the upper casing 101 and the lower casing 102 are closed. That is, in the state where the upper casing 101 and the lower casing 102 are closed, the speaker voice will be output from the voice output holes 301, 303 formed in the upper side and lower side of the upper casing 101, respectively, in the state
where the terminal is laid lengthways. In other words, when the terminal is laid sideways, the voice will be output from both the right and left directions of a wide and oblong display screen.

Meanwhile, in FIG. 7B, a rib 304 enclosing the first speaker opening 108A, and a voice output hole 305 outputting outside a speaker voice going through the voice channel formed by a rib 306 enclosing the second speaker opening 108B, and a voice output hole 307 outputting outside a speaker voice going through the voice channel formed by the rib 306 are shown in a state where the upper casing 101 and the lower casing 102 are opened. Namely, in the state where the upper casing 101 and the lower casing 102 are opened, the speaker voice will be output from the voice output holes 305, 307 formed on both the right and left sides of the upper casing 101, respectively, in the state where the terminal is laid lengthways. To put it in another ways, when the terminal is held sideways by user's hand in the state where the upper casing and lower casing of the terminal are opened, the voice will be output from both the right and left directions of a vertically oblong display screen.

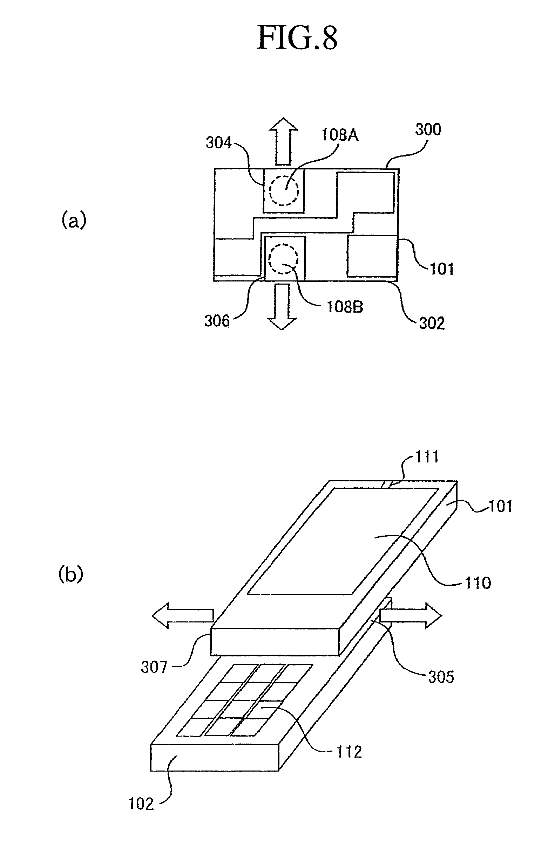

FIG. 8A and FIG. 8B are an explanatory view and an external perspective view showing the directions of voice output holes thereof in the slid and opened state. Referring to FIG. 8A, the parts indicated by solid lines represent the upper casing 101, and ribs 300, 302, 304, and 306 formed on the upper casing 101, and the parts indicated by dashed lines represent the speaker openings 108A, 108B of the lower casing 102. In order to clearly show relative positions between the ribs and the speaker openings 108A, 108B with the opening and closing of the upper casing 101 and the lower casing 102, the speaker openings 108A, 108B of the speakers not mounted on the upper casing 101 ventured to be shown by dashed lines in the figure. As shown in FIG. 8A, when the upper casing 101 and the lower casing 102 are in the opened state, the speaker openings 108A and 108B of the lower casing 102 are in the positions enclosed by the ribs 304 and 306 of the upper casing 101, respectively. Accordingly, as shown in FIG. 8B, the speaker voice will be output from the voice output holes 305, 307 formed on both the right and left sides of the upper casing 101 in the state where the terminal is laid lengthways, in other words, in the state where the display 110 is laid in the "vertically oblong" state. When the terminal of which upper and lower casings are opened is held lengthways by user's hand, the voice is output from both the right and left directions of a vertically oblong display screen.

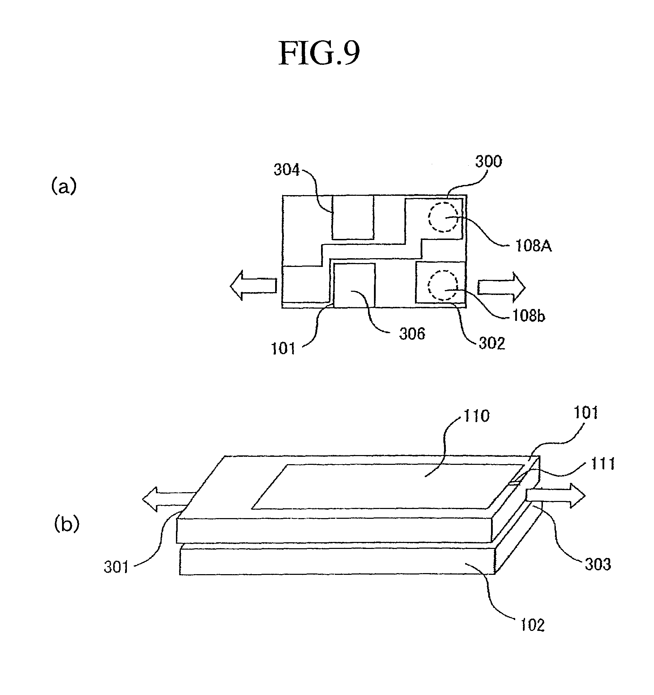

FIG. 9A and FIG. 9B are an explanatory view and an external perspective view showing the directions of the voice output holes in the slid and closed state. In FIGs. 9A, 9B, the same reference numerals as those in FIGs. 8A, 8B denote the same or corresponding parts, and therefore an explanation thereof is omitted. As shown in FIG. 9A, when the upper casing 101 and the lower casing 102 are in the close state, the speaker openings 108A and 108B of the lower casing 102 are in the positions enclosed by the ribs 300 and 302 of the upper casing 101, respectively. Therefore, as shown in FIG. 9B, in the state
where the terminal is laid sideways, to put it in another way, the speaker voice is output from the voice output holes 301, 303 formed on both the left and right sides of the upper casing 101 in the state where the display 110 is laid in the "oblong" state. To be more precise, a speaker voice, in the state where the terminal is laid sideways, is output from the voice output holes formed on the upper and the lower ends of the upper casing 101. When the terminal is laid sideways, the voice will be output from both the right and left directions of a wide and oblong display screen.

As described above, the slide type portable telephone according to the third embodiment of the present invention is provided with ribs formed on the casing (the upper casing 101 in the above embodiments) different from the casing (the lower casing 102 in the above embodiments) where the speaker is provided at the position where the upper casing and lower casing superpose in the slid and opened state. Besides, the ribs include that forming the voice channel while enclosing the speaker in the slid and opened state, and that forming the voice channel while enclosing the speaker in the slid and closed state. Since the ribs are formed on the casing different from the casing
where the speaker is provided, and the ribs include those each enclosing the speaker in the slid and opened state and in the slid and closed state, respectively, it is possible to change a positional relationship between the ribs and the speaker depending on whether the upper and the lower casings are in the opened state or in the closed state, thereby enabling to lead a speaker voice to different voice channels. In conclusion, it allows outputting the speaker voice from the different sides of the terminal according to the slid and opened state or slid and closed sate. Especially, the adoption of the above-mentioned structure eliminates the need for newly providing a speaker for outputting the speaker voice from the different sides of the terminal, which cuts down expenses to be cost for the terminal, in addition to the downsizing and slimming thereof.

Say in addition, no explanation is given about a structure where the speaker 104 is mounted on the lower casing 102 in the above description. However, in this respect, the technical features explained in the first embodiment or the second embodiment should be properly exploited. Mounting the speaker 104 as described in the first embodiment or the second embodiment enables striving for the further downsizing and sliming of the terminal.

### INDUSTRIAL APPLICABILITY

The present invention may be applied not only to the slide type portable telephones explained in the embodiments but also to portable communication terminals which are capable of reproducing a voice and equipped with communication functions, and to portable music-reproducing apparatuses which are not equipped with communication functions.

## Claims

1. A portable terminal including:
a first casing having a display displaying images;
a second casing which is relatively movably connected with the first casing opposed to the back of the first casing that is an opposite side of the front thereof, and in which a speaker opening for emitting a voice produced by a built-in speaker is formed; and
a rib formed so as to enclose the speaker opening in a way that the rib closes in the other direction while opening in an arbitrary direction on the second casing, and so as to extend to an end of the second casing in the vicinity of the speaker opening provided at the front of the second casing opposed to the back of the first casing, with the second casing being relatively movably connected with the first casing.

2. The portable terminal according to Claim 1, wherein the speaker is mounted within the second casing with the upper end of the speaker contacted with the inner side of the second casing in the vicinity of the speaker opening.

3. The portable terminal according to Claim 1, wherein the speaker is mounted within the second casing with the outer side of the speaker contacted with the inner side of the speaker opening formed in the second casing.

4. A portable terminal including:
a first casing having a display displaying images;
a second casing which is relatively movably connected with the first casing opposed to the back of the first casing that is an opposite side of the front thereof, and in which a speaker opening for emitting a voice produced by a built-in speaker is formed;
a first rib formed so as to enclose the speaker opening in a way that the first rib closes in the other direction while opening in an arbitrary direction on the back of the first casing, and so as to extend to an end of the first casing, at a predetermined position on the back of the first casing opposed to the speaker opening of the second casing in a closed state where the first casing and the second casing are almost superposed; and
a second rib formed so as to enclose the speaker opening in a manner that the second rib closes in the other direction while opening in an arbitrary direction on the back of the first casing, and so as to extend to an end of the first casing, at a predetermined position on the back of the first casing opposed to the speaker opening in an opened state where a transition is occurred from a closed state to a state where at least a part of the second casing superposes on the first casing.

5. The portable terminal according to Claim 4, wherein the speaker is mounted within the second casing with the upper side of the speaker contacted with the inner side of the second casing in the vicinity of the speaker opening.

6. The portable terminal according to Claim 4, wherein the speaker is mounted within the second casing with the outer side of the speaker contacted with the inner side of the speaker opening formed in the second casing.
